# EUROPÄISCHE PATENTSCHRIFT

(11) **EP 3 450 269 B1**
(45) Veröffentlichungstag und Bekanntmachung des Hinweises auf die Patenterteilung: **01.04.2020**
(21) Anmeldenummer: 18188814.0
(22) Anmeldetag: 14.08.2018
(51) Int. Cl.: B60T 7/20

(54) **BREMSEINRICHTUNG FÜR EINEN FAHRZEUGANHÄNGER**
BRAKE DEVICE FOR A VEHICLE TRAILER
DISPOSITIF DE FREINAGE POUR UNE REMORQUE DE VÉHICULE

(30) Priorität: 31.08.2017 DE 102017120090
(43) Veröffentlichungstag der Anmeldung: 06.03.2019
(73) Patentinhaber: BPW-Hungária Kft., 9700 Szombathely (HU)
(72) Erfinder: Kaderász, Péter, 9700 Szombathely (HU); Major, Zsolt, 9700 Szombathely (HU); Kiricsi, Bálint, 9751 Vép (HU); Andrási, Mátyás, 9700 Szombathely (HU)
(74) Vertreter: Christophersen Patentanwälte

(56) Entgegenhaltungen:
- DE-A1- 3 148 110
- GB-A- 1 328 741

## Beschreibung

Die Erfindung betrifft eine Bremseinrichtung für einen Fahrzeuganhänger, mit druckmittelbetätigten Radbremsen auf beiden Fahrzeugseiten und mit einem Bremsregelventil zum Einstellen des Druckwerts des bei Bremsbetätigung zu den Radbremsen gelangenden Druckmittels, wobei das Bremsregelventil ein an einem Chassisteil des Fahrzeuganhängers befestigtes Ventilgehäuse und ein in dem Ventilgehäuse um eine Achse drehbewegliches Stellelement umfasst, wobei das Stellelement Bestandteil einer stufenlos veränderbar ausgebildeten Drossel ist und das Stellelement fest mit einer Betätigungsstange verbunden ist, die zu der Achse quer angeordnet ist und sich außerhalb des Ventilgehäuses von diesem weg erstreckt.

Fahrzeuganhänger sind, sofern das zulässige Gesamtgewicht nicht sehr gering ist, mit Radbremsen auf beiden Fahrzeugseiten ausgestattet. Für land- und fortwirtschaftliche Zwecke sind relativ einfach aufgebaute Fahrzeuganhänger bekannt, deren Fahrgestell im Wesentlichen aus der Zugdeichsel, dem Fahrzeugchassis und der Bremseinrichtung besteht. Oft werden solche Fahrzeuganhänger mit einem Rohchassis, d. h. ohne die den eigentlichen Fahrzeugzweck bestimmenden Aufbauten ausgeliefert. Der Fahrzeuganhänger wird daher durch den Kunden oder durch den Anwender entsprechend dem spezifischen Einsatzzweck mit den entsprechenden Aufbauten versehen. Abhängig von dem Gewicht der so montierten Aufbauten kann das Gesamtgewicht des Fahrzeuganhängers in einem weiten Spektrum variieren. Dem muss auch die mit einem Druckmittel, z. B. pneumatisch, betriebene Radbremse gerecht werden. Daher sind derartige Fahrzeuganhänger mit Bremsregelventilen ausgestattet, die sich in drei unterschiedlichen Stellungen wie zum Beispiel "Volllast", "Halblast" und "Leer" einstellen lassen. Es liegt dann in der Verantwortung des Fahrers, an dem Bremsregelventil je nach dem zu bremsenden Gesamtgewicht die richtige hydraulische Bremsleistung einzustellen. In der Praxis geschieht dies allerdings nicht immer, so dass Fahrzeuganhänger oft mit nicht korrekt eingestellter Bremsleistung unterwegs sind.

Bekannt sind daher auch Systeme, bei denen das korrekte Einstellen des Bremsdrucks automatisch und stufenlos erfolgt. Diese Systeme finden sich bei solchen druckluftgebremsten, landwirtschaftlich genutzten Fahrzeuganhängern, bei denen das Fahrzeugchassis bzw. der Fahrzeugrahmen gefedert ist. Ist ein Fahrzeug gefedert, sinkt es umso mehr ein, je höher das Fahrzeuggewicht ist. Dieser Umstand wird dazu genutzt, zwischen dem um eine Achse drehbeweglichen Stellelement des Bremsregelventils und dem Fahrzeugchassis eine Gestängeverbindung zu realisieren. Je weiter sich das Fahrzeugchassis aufgrund des Fahrzeuggewichts senkt, desto stärker wird das Stellelement gedreht, welches seinerseits Bestandteil einer stufenlos veränderbar ausgebildeten Drossel des Bremsregelventils ist. Ein solches, mit automatischer und stufenloser Einstellung des Bremsdrucks arbeitendes System lässt sich allerdings nur bei einem ausreichenden Federweg des Fahrzeuganhängers sinnvoll einsetzen, da die Stellgröße des Bremsregelventils aus der Einfederung des Fahrzeugaufbaus mechanisch abgeleitet wird. Für einen ungefederten oder nahezu ungefederten Fahrzeuganhänger lassen sich stufenlos arbeitende Bremsregelventile bisher nicht sinnvoll einsetzen. Eine bekannte AnhängerBremsanlage wird in DE 31 48 110 A1 offenbart.

Der Erfindung liegt die Aufgabe zugrunde, die bekannten, mit stufenlos einstellbarem Bremsdruck arbeitenden Bremseinrichtungen in der Weise weiterzubilden, dass sich die Bremseinrichtungen auch für solche Fahrzeuganhänger verwenden lassen, die über keine nennenswerte Fahrzeugfederung verfügen.

Zur Lösung dieser Aufgabe wird bei einer Bremseinrichtung für einen Fahrzeuganhänger mit den eingangs angegebenen Merkmalen vorgeschlagen, dass die Betätigungsstange an ihrem dem Ventilgehäuse abgewandten Ende mit einem arretierbaren Element versehen ist, dass das arretierbare Element durch Formschluss in einer von mehreren unterschiedlichen Positionen an einer Konsole festlegbar ist, und dass die Konsole an einem Chassisteil des Fahrzeuganhängers befestigt ist.

Erfindungsgemäß wird also das bekannte, mit einer stufenlos einstellbaren Drossel versehene Bremsregelventil weiterentwickelt, indem es um einen Arretiermechanismus ergänzt wird. Dazu wird die sich von dem Ventilgehäuse des Bremsregelventils weg erstreckende Betätigungsstange an ihrem dem Bremsregelventil abgewandten, freien Ende mit einem arretierbaren Element versehen. Dieses Element ist durch Formschluss in einer von mehreren unterschiedlichen Positionen an einer Konsole festlegbar. Die Konsole ist an einem Chassisteil des Fahrzeuganhängers befestigt und vorzugsweise an demselben Chassisteil, an dem auch das Ventilgehäuse des Bremsregelventils befestigt ist.

Auf diese Weise lassen sich mit stufenlos einstellbarem Bremsdruck arbeitende Bremseinrichtungen auch für Fahrzeuganhänger verwenden, die über keine nennenswerte Fahrzeugfederung verfügen.

Um beim Gesamtgewicht des Fahrzeuganhängers möglichst vielen Belastungssituationen gerecht zu werden, ist das arretierbare Element in fünf oder sogar sieben unterschiedlichen Positionen an der Konsole festlegbar. An der Konsole können diese Positionen gut sichtbar mit entsprechenden Zahlen versehen sein, also zum Beispiel "1" bis "5" bzw. "1" bis "7".

Vorzugsweise ist die Konsole an einem Träger ausgebildet, der zumindest teilweise zwischen dem Ventilgehäuse und dem Fahrwerks- oder Chassisteil angeordnet ist. In diesem Fall setzt sich der Träger zusammen aus einem Montageabschnitt, welcher zwischen dem Ventilgehäuse und dem Chassiteil befestigt ist, und einem abgewinkelt zu dem Montageabschnitt angeordneten Abschnitt, an dem sich die Konsole befindet.

Der Träger kann dahingehend weitergebildet sein, dass der Montageabschnitt mit Öffnungen oder Ausnehmungen versehen ist, durch die hindurch Befestigungsmittel, zum Beispiel Schrauben, führen, die das Ventilgehäuse mit dem Chassisteil verbinden.

Angesichts der Größe des Bremsregelventils kann es von Vorteil sein, wenn der Montageabschnitt des Trägers mit einer Ausnehmung oder Öffnung versehen ist, durch die hindurch Gehäuseteile des Bremsregelventils führen.

Mit einer weiteren Ausgestaltung wird vorgeschlagen, dass der Träger einschließlich der Konsole aus einem gestanzten und verformten Metallblech besteht.

Mit einer weiteren Ausgestaltung wird vorgeschlagen, dass der Träger mit in unterschiedliche Richtungen weisenden Befestigungsflächen versehen ist, die jeweils Öffnungen oder Ausnehmungen zum wahlweisen Hindurchführen von Befestigungsmitteln aufweisen. Diese ermöglicht verschiedene Positionen des Ventilgehäuses am Fahrzeug. Die Befestigungsmittel können z.B. Verschraubungen sein.

Ferner wird, für den Formschluss des arretierbaren Elements, eine Art Kulissenführung bzw. Verstellkulisse vorgeschlagen. Bei dieser Bauart ist die Konsole, um den Formschluss des arretierbaren Elements zu ermöglichen, mit einer länglichen, sich auf einem Kreisbogen um die Einstellachse des Stellelements erstreckenden Öffnung versehen. Die Öffnung ist segmentiert und setzt sich zusammen aus schmaleren Öffnungsabschnitten und breiteren Öffnungsabschnitten, die einander abwechseln. Eine solche Verstellkulisse bietet den Vorteil einer relativ einfachen, da wenig Handgriffe erfordernden Umstellung zwischen den zur Verfügung stehenden Arretierpositionen. Insbesondere ist es für das Umstellen nicht notwendig, einzelne Teile z.B. abzuschrauben und hinterher wieder zu befestigen.

Wünschenswert kann es sein, die Arretierpositionen in Abhängigkeit einer individuellen Charakteristik des Bremsregelventils oder von der Gewichtscharakteristik des Fahrzeuganhängers insgesamt justieren zu können. Eine solche Justage lässt sich einfach durchführen, wenn die Konsole mindestens zweiteilig gestaltet ist und sich aus einem chassisfest montierten Grundkörper und einem daran lösbar befestigten Kulissenelement zusammensetzt, wobei die Öffnung einschließlich der sich abwechselnden schmaleren und breiteren Öffnungsabschnitte in dem Kulissenelement ausgebildet ist, und das Kulissenelement in Bezug auf den Grundkörper in Längsrichtung der Öffnung verstellbar ist, vorzugsweise mittels einer Langlochführung.

Außerdem wird vorgeschlagen, dass das arretierbare Element längsbeweglich auf einer Arretierachse angeordnet ist, die sich parallel zu der Einstellachse des Stellelements erstreckt, und dass das arretierbare Element in Längsrichtung der Arretierachse aufeinander folgend mit einem Arretierabschnitt und einem Freigabeabschnitt versehen ist, wobei die Breite des Arretierabschnitts größer ist als die Breite des schmaleren Öffnungsabschnitts und nicht größer ist als die Breite des breiteren Öffnungsabschnitts. Die Breite des Freigabeabschnitts ist nicht größer als die Breite des schmaleren Öffnungsabschnitts.

Zur Sicherung der arretierten Position kann eine Feder hilfreich sein, welche in Richtung der Arretierachse arbeitet und das arretierbare Element stets in Richtung seiner Arretierung beaufschlagt.

Die Bedienung lässt sich verbessern, wenn das arretierbare Element außerdem mit einem von außen gut zugänglichen Griffabschnitt versehen ist, wobei der Arretierabschnitt zwischen dem Griffabschnitt und dem Freigabeabschnitt angeordnet ist.

Das Ende der Betätigungsstange kann einem dem Ventilgehäuse zugewandten, mit Skalierungen versehenden Rand der Konsole gegenüberliegend angeordnet sein. Zum Beispiel kann das Ende der Betätigungsstange als ein zugespitzt gestalteter Zeiger ausgebildet sein, der der jeweiligen Skalierung mit einem Blick zugeordnet werden kann, so dass die gewählte Einstellung des Bremsregelventils einfach überprüfbar ist.

Gemäß einer weiteren Ausgestaltung ist das Ende der Betätigungsstange in einer Ausnehmung eines Trägers befestigt. In diesem Träger ist eine sich parallel zu der Achse erstreckende Längsführung für das arretierbare Element ausgebildet ist.

Bei einer anderen Grundbauart des arretierbaren Elements ist die Konsole nicht mit einer Kulisse, sondern mit einer Mehrzahl einzelner Löcher versehen, in die das arretierbare Element zur Auswahl der Position jeweils einsteckbar ist, wobei die Löcher auf einem sich um die Achse des Stellelements erstreckenden Kreisbogen angeordnet sind. Als arretierbares Element kann in diesem Fall das rechtwinklig abgebogene, freie Ende der Betätigungsstange dienen.

Weitere Vorteile und Einzelheiten werden im Folgenden anhand eines auf der Zeichnung wiedergegebenem Ausführungsbeispiels erläutert. Im Einzelnen zeigen:
- Fig. 1: in perspektivischer Darstellung ein an einem Anhängerchassis montiertes Bremsregelventil, welches zentraler Bestandteil einer Bremseinrichtung für einen Fahrzeuganhänger ist, wobei das Bremsregelventil in einzelnen Stellungen arretierbar ist;
- Fig. 2: die Gegenstände der Fig. 1 in einer Explosionsdarstellung;
- Fig. 3: einen Schnitt durch den Arretierabschnitt des Bremsregelventils.

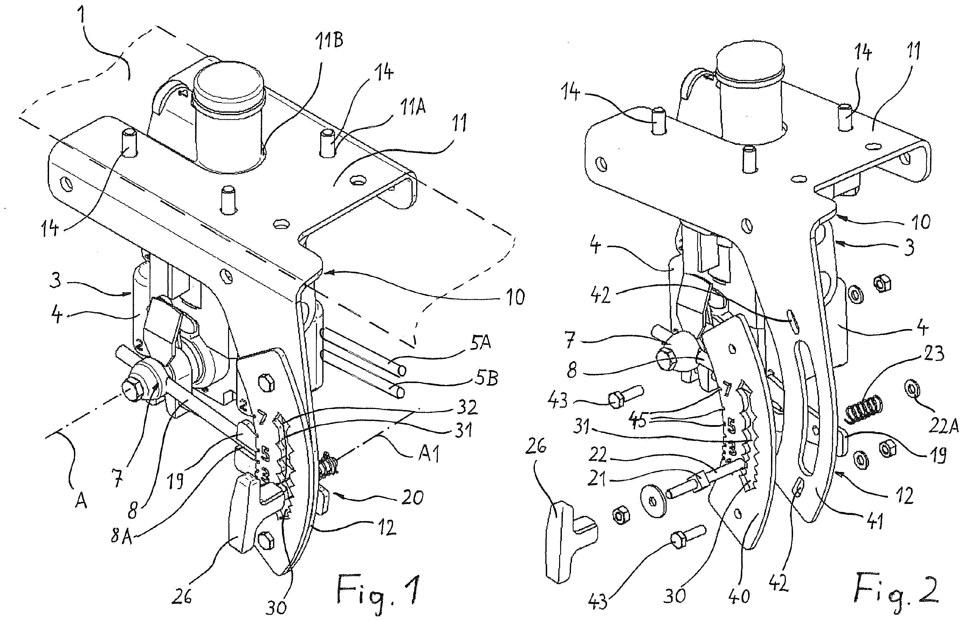

Die Fig. 1 zeigt zentrale Bestandteile einer Bremseinrichtung für einen Fahrzeuganhänger, und insbesondere für einen land- oder forstwirtschaftlichen Zwecken dienenden Nutzfahrzeuganhänger. Das Fahrgestell eines solchen Fahrzeugs ist oft einfach und robust aufgebaut und besteht im wesentlichen aus der mit dem Zugfahrzeug verbindbaren Zugdeichsel, dem Fahrzeugchassis und einer Bremseinrichtung. Die Bremseinrichtung wiederum umfasst druckmittelbetätigte Radbremsen auf beiden Fahrzeugseiten sowie ein an dem Chassis 1 des Nutzfahrzeuganhängers befestigtes Bremsregelventil 3. Mit dem Bremsregelventil 3 wird der Basisdruck eingestellt, mit dem das zu den Bremsen gelangende Druckfluid, üblicherweise ein Hydrauliköl, zu den Betätigungskolben in den Bremsen gelangen kann. Die verwendeten Radbremsen sind in der Regel Trommelbremsen, können aber auch Scheibenbremsen sein.

Ein derartiger Fahrzeuganhänger ist oft nur mit einem Rohchassis und ohne die den eigentlichen Fahrzeugzweck bestimmenden Aufbauten ausgeliefert. Der Fahrzeuganhänger wird vielmehr durch den Kunden oder durch den Anwender entsprechend dem spezifischen Einsatzzweck mit den benötigten Nutzfahrzeugaufbauten versehen. Abhängig von dem Gewicht der so montierten Aufbauten kann das Gesamtgewicht des Fahrzeuganhängers in einem weiten Spektrum variieren. Dem muss auch die hydraulisch betriebene Radbremse gerecht werden.

Daher ist das Bremsregelventil 3 einstellbar, und zwar in vorzugsweise fünf, sechs oder sogar sieben alternativen Positionen. Es liegt in der Verantwortung des Fahrers, an dem Bremsregelventil 3 je nach Einsatzgebiet und dem zu bremsenden Gesamtgewicht des Fahrzeugs die richtige hydraulische Bremsleistung einzustellen. Die Einstellung nimmt der Fahrer z.B. anhand einer Tabelle vor, in der für tabellenartig zusammengefasste Gesamtgewichte des Fahrzeuganhängers jeweils die zugehörigen Einstellwerte von "1" bis "7" verzeichnet sind. Dabei kann "7" für den höchsten maximalen Betriebsdruck der Bremsen stehen, und dementsprechend "1" für den geringsten maximalen Betriebsdruck der Bremsen, wie er z.B. bei Langsamfahrt und einem nur mit dem Rohchassis versehenen Fahrzeug benötigt wird.

Das Bremsregelventil 3 ist innerhalb eines druckdicht geschlossenen Ventilgehäuses 4 mit einer stufenlos veränderbar ausgebildeten Drossel versehen, durch welche der zu den Fahrzeugbremsen gelangende Druck auf einen Maximalwert begrenzt wird. Druckmittelleitungen 5 führen zu den Radbremsen auf der linken und der rechten Fahrzeugseite.

Das Einstellen der Drosselwirkung erfolgt durch ein Stellelement 7, welches in dem Ventilgehäuse 4 um eine Achse A drehbar ist. Das drehbare Stellelement 7 befindet sich teilweise innerhalb des Ventilgehäuses, und führt zu einem kleineren Teil aus dem Ventilgehäuse 4 heraus. An diesem aus dem Ventilgehäuse 4 herausgeführten Abschnitt des Stellelements 7 ist eine Betätigungsstange 8 befestigt. Die Betätigungsstange 8 ist quer zu der Achse A des Stellelements 7 angeordnet und erstreckt sich von dem Ventilgehäuse 4 weg.

Die Betätigungsstange 8 ist an ihrem dem Ventilgehäuse 4 abgewandten Ende 8A mit einem arretierbaren Element 20 versehen, welches bei dem hier beschriebenen Ausführungsbeispiel mehrteilig aufgebaut ist. Das arretierbare Element 20 ist in der Weise gestaltet, dass es durch Formschluss in einer von mehreren unterschiedlichen Positionen an einer Konsole 12 festlegbar ist. Diese unterschiedlichen Arretierpositionen sind entsprechend an der Konsole 12 markiert, z.B. mit den Zahlen "1" bis "7".

Die Konsole 12, an der die Arretierung erfolgt, ist ebenso wie das Bremsregelventil an einem Chassisteil 1 des Fahrzeuganhängers befestigt. Dieses Chassisteil 1 kann z.B. ein Längsträger des Fahrzeugrahmens sein, an dem auch das Bremsregelventil 3 selbst montiert ist. Für eine gemeinsame Montage ist ein aus Blech geformter Träger 10 vorhanden. An dem Träger 10 sind zwei funktionale Bereiche ausgebildet, nämlich ein Montageabschnitt 11 sowie ein Abschnitt mit der bereits beschriebenen, der Arretierung dienenden Konsole 12.

Der Montageabschnitt 11 des Trägers 10 befindet sich zwischen dem Chassisteil 1 des Fahrzeuganhängers und dem Ventilgehäuse 4. Wird daher das Ventilgehäuse 4 gegen das Chassisteil 1 verschraubt, wozu entsprechende Schrauben als Befestigungsmittel 14 dienen, wird zugleich auch der Montageabschnitt 11 fixiert.

Zum Hindurchführen der Schrauben 14 ist der Montageabschnitt 11 mit entsprechenden Öffnungen 11A für den Durchtritt der Schrauben 14 versehen. Außerdem ist der Montageabschnitt 11 mit einer größeren Ausnehmung 11B versehen, die Platz für den Durchtritt von Gehäuseteilen des relativ großen Bremsregelventils 3 bietet.

Der Montageabschnitt 11 kann mit weiteren Öffnungen oder Löchern versehen sein, um so universell auch an anders angeordneten Chassisteilen des Nutzfahrzeuganhängers befestigt zu werden. Beim Ausführungsbeispiel erfolgt diese Befestigung von unten an dem Chassisteil 1, ebenso sind jedoch auch Befestigungen des Bremsregelventils z.B. seitlich an Chassisteilen möglich.

Bestandteil des Trägers 10 ist außerdem der Abschnitt mit der Konsole 12, welche sich rechtwinklig zu dem Montageabschnitt 11 erstreckt. An der Konsole 12 befinden sich die einzelnen Arretierpositionen für das arretierbare Element 20.

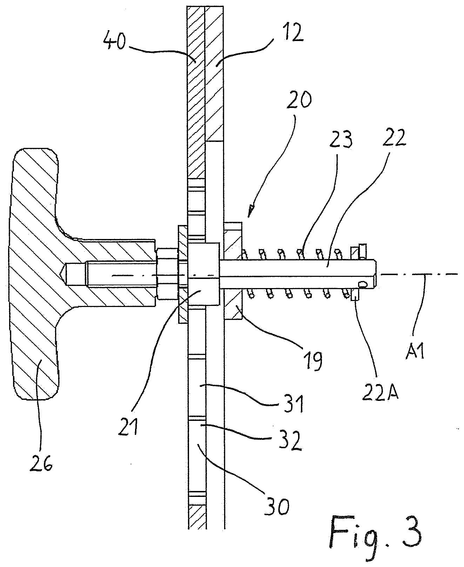

Ein Aufbau der Arretiereinrichtung und deren Einzelteile werden im Folgenden anhand der Figur 3 erläutert.

An dem von der Einstellachse A weg führenden, freien Ende 8A der Betätigungsstange 8 ist ein kleiner Träger 19 befestigt, vorzugsweise durch Verschweißen oder Verlöten mit der Betätigungsstange 8. In dem Träger 19 befindet sich eine Öffnung, die die Längsführung für das eigentliche arretierbare Element 20 bildet. Diese Längsführung an dem Träger 19 ist so ausgerichtet, dass das arretierbare Element 20 in Richtung einer Arretierachse A1 beweglich ist, die sich parallel zu der Drehachse A des Stellelements 7 erstreckt.

Das arretierbare Element 20 weist in Richtung der Arretierachse A1 aufeinanderfolgend einen Freigabeabschnitt 22, einen Arretierabschnitt 21 und einen Griffabschnitt 26 auf. Der Freigabeabschnitt 22 und der Arretierabschnitt 21 sind hier von quadratischem Querschnitt, können jedoch auch andere Querschnitte aufweisen, z. B. runde Querschnitte von unterschiedlich großem Durchmesser. Wichtig ist allein, dass die Breite auf dem Arretierabschnitt 21 größer ist als die Breite auf dem Freigabeabschnitt 22.

Der Griffabschnitt 26 ist als Knebel gestaltet und befindet sich außen vor der Konsole 20 und ist dort gut von Hand greifbar.

Am hinteren Ende des schlanken Freigabeabschnitts 22 ist eine Scheibe 22 A befestigt, welche das eine Wiederlager für eine Feder 23 bildet. Die Feder 23 umgibt den Freigabeabschnitt 22, und stützt sich mit ihrem anderen Ende gegen den Träger 19 ab. Auf diese Weise beaufschlagt die Feder 23 das arretierbare Element 20 in Richtung von dessen Arretierung. Die Federkraft führt also dazu, dass das arretierbare Element jeweils in seiner Arretierstellung verharrt, und nur durch aktives Ziehen an dem Griffabschnitt 26 dieser Arretierstellung zu Gunsten der Freigabestellung aufgehoben werden kann.

Für die Arretierung ist die Konsole 12 mit einer entsprechend angepassten Kulissenführung versehen, die einen Formschluss des arretierbaren Element 20 in den einzelnen, hier also in den fünf bis sieben unterschiedlichen Stellungen ermöglicht. Hierzu befindet sich an der Konsole eine längliche, sich auf einem Kreisbogen um die Achse A erstreckende Öffnung 30, die segmentiert ist und sich zusammensetzt aus schmaleren Öffnungsabschnitten 31 und breiteren Öffnungsabschnitten 32, die einander abwechseln.

Die schmaleren Öffnungsabschnitte 31 sind von so geringer Breite, dass in Längsrichtung der Kulisse bzw. der Öffnung 30 zwar der Freigabeabschnitt 22 des arretierbaren Elements passieren kann, nicht jedoch der Arretierabschnitt 21. Die Breite des Arretierabschnitts 21 ist also größer als die Breite des schmaleren Öffnungsabschnitts 31, und nicht größer als die Breite des breiteren Öffnungsabschnitts 32. Zudem ist die Breite des Freigabeabschnitts 22 nicht größer als die Breite des schmaleren Öffnungsabschnitts 31.

In Folge dieser Größenverhältnisse einerseits an der Kulisse, andererseits an dem arretierbaren Element 20, lässt sich durch Ziehen an dem Griffabschnitt 26 der Arretierabschnitt 21 aus dem Öffnungsabschnitt 32 herausziehen, und sodann die Betätigungsstange 8 wie gewünscht verschwenken bis eine andere Arretierposition erreicht ist. In dieser lässt sich das arretierbare Element unter Zuhilfenahme der Kraft der Feder 23 wieder längs der Arretierachse A1 zurückbewegen, wobei der Arretierabschnitt 21 in den diesmal anderen Öffnungsabschnitt 32 einrastet und so arretiert. Ein Verstellen zwischen den einzelnen Positionen ist daher leicht zu bewerkstelligen, kann jedoch nicht versehentlich erfolgen, etwa aufgrund von Rüttelbewegungen des Fahrzeugs.

Die durch die längliche Öffnung 30 gebildete Kulisse lässt sich als Ganzes in ihrer Längsrichtung justieren. Zu diesem Zweck setzt sich die Konsole 12 aus einem Grundkörper 41, welcher einstückiger Bestandteil des Trägers 10 ist, und einem an dessen Flachseite außen befestigten Kulissenelement 40 zusammen. Die längliche Öffnung 30 einschließlich der schmaleren und breiteren Öffnungsabschnitte 31, 32 ist nur an dem Kulissenelement 40 ausgebildet. Das Kulissenelement 40 ist in Bezug auf den einstückig an dem Träger 10 angeformten Grundkörper 41 in Längsrichtung der Öffnung 30 verstellbar. Hierzu befinden sich unterhalb und oberhalb der kulissenförmigen Öffnung 30 Langlöcher 42, mit deren Hilfe sich das Kulissenelement 40 in Längsrichtung der Kulisse etwas verstellen, und so justieren lässt. Durch diese Justage kann besonderen Randbedingungen Rechnung getragen werden, z.B. der Drosselkennlinie des Bremsregelventils 3 oder besonderen Gegebenheiten beim Gesamtgewicht des Fahrzeuganhängers.

Nach erfolgter Justage wird das Kulissenelements 40 wieder mit dem dahinter angeordneten Grundkörper 41 verspannt, vorzugsweise mittels Schrauben 43, welche durch das oberhalb und unterhalb angeordnete Langloch 42 hindurchführen.

Nicht auf der Zeichnung dargestellt ist eine alternative Ausführungsform, bei der als arretierbares Element 20 das freie Ende der schlanken Betätigungsstange 8 dient, wozu die Betätigungsstange 8 an diesem Ende rechtwinklig abgewinkelt ist. Mit diesem abgewinkelten Ende hakt die Befestigungstange 8 in eines von insgesamt sieben zur Auswahl stehenden Löchern. In diesem Fall ist die Konsole 12 für den Formschluss des arretierbaren Elements mit dieser Anzahl von Löchern versehen, in die das abgewinkelte freie Ende der Betätigungsstange 8 zur Auswahl der Position jeweils einsteckbar ist. Die Löcher sind auf einem sich um die Achse A erstreckenden Kreisbogen angeordnet. Um die Arretierposition zu ändern, muss die schlanke und dadurch etwas biegsame Betätigungsstange 8 an ihrem freien Ende etwas nach hinten weggedrückt werden, wodurch sie das betreffende Loch verlässt und sie dann, nach Wahl einer neuen Arretierposition, in ein anderes Loch von hinten her wieder einschnappen kann.

### Bezugszeichenliste

- 1: Chassis, Chassisteil
- 3: Bremsregelventil
- 4: Ventilgehäuse
- 5: Druckmittelleitung
- 7: Stellelement
- 8: Betätigungsstange
- 8A: Ende

- 10: Träger
- 11: Montageabschnitt
- 11A: Öffnung
- 11B: Ausnehmung
- 12: Konsole
- 14: Befestigungsmittel
- 19: Träger

- 20: arretierbares Element
- 21: Arretierabschnitt
- 22: Freigabeabschnitt
- 22A: Scheibe
- 23: Feder
- 26: Griffabschnitt

- 30: Öffnung
- 31: schmalerer Öffnungsabschnitt
- 32: breiterer Öffnungsabschnitt

- 40: Kulissenelement
- 41: Grundkörper
- 42: Langloch
- 43: Schraube
- 45: Skalierung

- A: Achse
- A1: Arretierachse

## Patentansprüche

1. Bremseinrichtung für einen Fahrzeuganhänger, mit druckmittelbetätigten Radbremsen auf beiden Fahrzeugseiten und mit einem Bremsregelventil (3) zum Einstellen des Druckwerts des bei Bremsbetätigung zu den Radbremsen gelangenden Druckmittels, wobei das Bremsregelventil (3) ein an einem Chassisteil des Fahrzeuganhängers befestigtes Ventilgehäuse (4) und ein in dem Ventilgehäuse (4) um eine Achse (A) drehbewegliches Stellelement (7) umfasst, wobei das Stellelement (7) Bestandteil einer stufenlos veränderbar ausgebildeten Drossel ist und das Stellelement (7) fest mit einer Betätigungsstange (8) verbunden ist, die zu der Achse (A) quer angeordnet ist und sich außerhalb des Ventilgehäuses (4) von diesem weg erstreckt, **dadurch gekennzeichnet, dass** die Betätigungsstange (8) an ihrem dem Ventilgehäuse (4) abgewandten Ende (8A) mit einem arretierbaren Element (20) versehen ist, dass das arretierbare Element durch Formschluss in einer von mehreren unterschiedlichen Positionen an einer Konsole (12) festlegbar ist, und dass die Konsole (12) an einem Chassisteil des Fahrzeuganhängers befestigt ist.

2. Bremseinrichtung nach Anspruch 1, **dadurch gekennzeichnet, dass** das arretierbare Element (20) in fünf bis sieben unterschiedlichen Positionen an der Konsole (12) festlegbar ist.

3. Bremseinrichtung nach Anspruch 1 oder 2, **dadurch gekennzeichnet, dass** die Konsole (12) an einem Träger (10) ausgebildet ist, der zumindest zum Teil zwischen dem Ventilgehäuse (4) und dem Chassisteil (1) angeordnet ist.

4. Bremseinrichtung nach Anspruch 3, **dadurch gekennzeichnet, dass** sich der Träger (10) aus einem Montageabschnitt (11), welcher zwischen dem Ventilgehäuse (4) und dem Chassisteil (1) angeordnet ist, und einem abgewinkelt zu dem Montageabschnitt (11) angeordneten Abschnitt zusammensetzt, welcher die Konsole (12) bildet.

5. Bremseinrichtung nach Anspruch 4, **dadurch gekennzeichnet, dass** der Montageabschnitt (11) mit Öffnungen (11A) oder Ausnehmungen versehen ist, durch die hindurch Befestigungsmittel (14) führen, die das Ventilgehäuse (4) mit dem Chassisteil (1) verbinden.

6. Bremseinrichtung nach Anspruch 4 oder 5, **dadurch gekennzeichnet, dass** der Montageabschnitt (11) mit einer Ausnehmung (11B) oder Öffnung versehen ist, durch die hindurch Gehäuseteile des Bremsregelventils (3) führen.

7. Bremseinrichtung nach einem der Ansprüche 3 - 6, **dadurch gekennzeichnet, dass** der Träger (10) einschließlich der Konsole (12) aus einem gestanzten und verformten Metallblech besteht.

8. Bremseinrichtung nach einem der Ansprüche 3 - 7, **dadurch gekennzeichnet, dass** der Träger (10) mit in unterschiedliche Richtungen weisenden Befestigungsflächen versehen ist, die jeweils Öffnungen oder Ausnehmungen zum wahlweisen Hindurchführen von Befestigungsmitteln aufweisen.

9. Bremseinrichtung nach einem der vorangehenden Ansprüche, **dadurch gekennzeichnet, dass** die Konsole (12) für den Formschluss des arretierbaren Elements (20) mit einer länglichen, sich auf einem Kreisbogen um die Achse (A) erstreckenden Öffnung (30) versehen ist, die segmentiert ist und sich zusammensetzt aus schmaleren Öffnungsabschnitten (31) und breiteren Öffnungsabschnitten (32), die einander abwechseln.

10. Bremseinrichtung nach Anspruch 9, **dadurch gekennzeichnet, dass** sich die Konsole (12) aus einem Grundkörper (41) und einem daran befestigten Kulissenelement (40) zusammensetzt, an dem die Öffnung (30) einschließlich der schmaleren und breiteren Öffnungsabschnitte (31, 32) ausgebildet ist, und dass das Kulissenelement (40) in Bezug auf den Grundkörper (41) in Längsrichtung der Öffnung (30) verstellbar ist, vorzugsweise mittels einer Langlochführung.

11. Bremseinrichtung nach Anspruch 9 oder 10, **dadurch gekennzeichnet, dass** das arretierbare Element (20) längsbeweglich auf einer Arretierachse (A1) angeordnet ist, die sich parallel zu der Achse (A) erstreckt, und dass das arretierbare Element (20) in Längsrichtung der Arretierachse (A1) aufeinanderfolgend mit einem Arretierabschnitt (21) und einem Freigabeabschnitt (22) versehen ist, wobei die Breite des Arretierabschnitts (21) größer ist als die Breite des schmaleren Öffnungsabschnitts (31) und nicht größer ist als die Breite des breiteren Öffnungsabschnitts (32).

12. Bremseinrichtung nach Anspruch 11, **dadurch gekennzeichnet, dass** die Breite des Freigabeabschnitts (22) nicht größer ist als die Breite des schmaleren Öffnungsabschnitts (31).

13. Bremseinrichtung nach Anspruch 11 oder 12, **gekennzeichnet durch** eine in Richtung der Arretierachse (A1) arbeitende Feder (23), welche das arretierbare Element (20) in Richtung seiner Arretierung beaufschlagt.

14. Bremseinrichtung nach einem der Ansprüche 11 - 13, **dadurch gekennzeichnet, dass** das arretierbare Element (20) außerdem mit einem Griffabschnitt (26) versehen ist, wobei der Arretierabschnitt (21) zwischen dem Griffabschnitt (26) und dem Freigabeabschnitt (22) angeordnet ist.

15. Bremseinrichtung nach einem der Ansprüche 9 - 14, **dadurch gekennzeichnet, dass** das Ende (8A) der Betätigungsstange (8) einem dem Ventilgehäuse (4) zugewandten, mit Skalierungen (45) versehenen Rand der Konsole (12) gegenüberliegt.

16. Bremseinrichtung nach Anspruch 15, **dadurch gekennzeichnet, dass** das der Skalierung (45) gegenüberliegende Ende der Betätigungsstange (8) als ein zugespitzt gestalteter Zeiger ausgebildet ist.

17. Bremseinrichtung nach Anspruch 15 oder 16, **dadurch gekennzeichnet, dass** das Ende (8A) der Betätigungsstange (8) in einer Ausnehmung eines Trägers (19) befestigt ist, und dass an dem Träger (19) eine sich parallel zu der Achse (A) erstreckende Längsführung für das arretierbare Element (20) ausgebildet ist.

18. Bremseinrichtung nach einem der Ansprüche 1 - 8, **dadurch gekennzeichnet, dass** die Konsole (12) für den Formschluss des arretierbaren Elements (20) mit einer Mehrzahl von Löchern versehen ist, in die das arretierbare Element (20) zur Auswahl der Position jeweils einsteckbar ist, wobei die Löcher auf einem sich um die Achse (A) erstreckenden Kreisbogen angeordnet sind.

19. Bremseinrichtung nach Anspruch 18, **dadurch gekennzeichnet, dass** das arretierbare Element (20) ein rechtwinklig abgebogenes, freies Ende der Betätigungsstange (8) ist.

## Claims

1. Brake device for a vehicle trailer, having pressure-medium-actuated wheel brakes on both sides of the vehicle and having a brake control valve (3) for setting the pressure value of the pressure medium passing to the wheel brakes when the brakes are actuated, wherein the brake control valve (3) comprises a valve housing (4) fastened to a chassis part of the vehicle trailer, and an adjusting element (7) which is rotatable in the valve housing (4) about an axis (A), wherein the adjusting element (7) is part of a throttle which is designed to be infinitely variable, and the adjusting element (7) is fixedly connected to an actuating rod (8) which is arranged transversely with respect to the axis (A) and, outside the valve housing (4), extends away from the latter, **characterized in that** the actuating rod (8) is provided at its end (8A) facing away from the valve housing (4) with a lockable element (20), **in that** the lockable element can be secured on a bracket (12) in one of a plurality of different positions by means of a form fit, and **in that** the bracket (12) is fastened to a chassis part of the vehicle trailer.

2. Brake device according to Claim 1, **characterized in that** the lockable element (20) can be secured on the bracket (12) in five to seven different positions.

3. Brake device according to Claim 1 or 2, **characterized in that** the bracket (12) is formed on a carrier (10) which is at least partially arranged between the valve housing (4) and the chassis part (1).

4. Brake device according to Claim 3, **characterized in that** the carrier (10) is composed of an installation section (11) which is arranged between the valve housing (4) and the chassis part (1), and of a section which is arranged at an angle to the installation section (11) and forms the bracket (12).

5. Brake device according to Claim 4, **characterized in that** the installation section (11) is provided with openings (11A) or recesses through which fastening means (14) pass, the fastening means connecting the valve housing (4) to the chassis part (1).

6. Brake device according to Claim 4 or 5, **characterized in that** the installation section (11) is provided with a recess (11B) or opening through which housing parts of the brake control valve (3) pass.

7. Brake device according to one of Claims 3-6, **characterized in that** the carrier (10) including the bracket (12) is composed of a punched and deformed metal sheet.

8. Brake device according to one of Claims 3-7, **characterized in that** the carrier (10) is provided with fastening surfaces which face in different directions and each have openings or recesses for the selective passage of fastening means.

9. Brake device according to one of the preceding claims, **characterized in that**, for the form fit of the lockable element (20), the bracket (12) is provided with an elongate opening (30) which extends on a circular arc about the axis (A), is segmented and is composed of narrower opening sections (31) and wider opening sections (32) which mutually alternate.

10. Brake device according to Claim 9, **characterized in that** the bracket (12) is composed of a basic body (41) and a slotted guide element (40) which is fastened thereto and on which the opening (30) including the narrower and wider opening sections (31, 32) is formed, and **in that** the slotted guide element (40) is adjustable with respect to the basic body (41) in the longitudinal direction of the opening (30), preferably by means of an elongated hole guide.

11. Brake device according to Claim 9 or 10, **characterized in that** the lockable element (20) is arranged in a longitudinally movable manner on a locking axis (A1) which extends parallel to the axis (A), and **in that** the lockable element (20) is provided with a locking section (21) and a release section (22) consecutively in the longitudinal direction of the locking axis (A1), wherein the width of the locking section (21) is greater than the width of the narrower opening section (31) and is not greater than the width of the wider opening section (32).

12. Brake device according to Claim 11, **characterized in that** the width of the release section (22) is not greater than the width of the narrower opening section (31).

13. Brake device according to Claim 11 or 12, **characterized by** a spring (23) which works in the direction of the locking axis (A1) and acts upon the lockable element (20) in the direction of the locking thereof.

14. Brake device according to one of Claims 11-13, **characterized in that** the lockable element (20) is also provided with a handle section (26), wherein the locking section (21) is arranged between the handle section (26) and the release section (22).

15. Brake device according to one of Claims 9-14, **characterized in that** the end (8A) of the actuating rod (8) lies opposite an edge of the bracket (12) that faces the valve housing (4) and is provided with scalings (45).

16. Brake device according to Claim 15, **characterized in that** that end of the actuating rod (8) which is opposite the scaling (45) is in the form of a pointed indicator.

17. Brake device according to Claim 15 or 16, **characterized in that** the end (8A) of the actuating rod (8) is fastened in a recess of a carrier (19), and **in that** a longitudinal guide which extends parallel to the axis (A) and is intended for the lockable element (20) is formed on the carrier (19).

18. Brake device according to one of Claims 1-8, **characterized in that**, for the form fit of the lockable element (20), the bracket (12) is provided with a plurality of holes into which the lockable element (20) is in each case insertable for selection of the position, wherein the holes are arranged on a circular arc extending about the axis (A).

19. Brake device according to Claim 18, **characterized in that** the lockable element (20) is a free end, bent at a right angle, of the actuating rod (8).

## Revendications

1. Dispositif de freinage pour une remorque de véhicule, comprenant des freins de roue actionnés par un fluide sous pression sur les deux côtés du véhicule et comprenant une soupape de régulation de freinage (3) servant à régler la valeur de pression du fluide sous pression parvenant jusqu'aux freins de roue lors de l'actionnement des freins, dans lequel la soupape de régulation de freinage (3) comporte un carter de soupape (4) fixé à une partie de châssis de la remorque de véhicule et un élément de réglage (7) mobile en rotation autour d'un axe (A) dans le carter de soupape (4), dans lequel l'élément de réglage (7) fait partie d'un étranglement réalisé de manière variable en continu et l'élément de réglage (7) est relié solidement à une tige d'actionnement (8) qui est disposée transversalement à l'axe (A) et s'étend à l'extérieur du carter de soupape (4) à l'écart de celui-ci, **caractérisé en ce que** la tige d'actionnement (8) est dotée d'un élément verrouillable (20) à son extrémité (8A) opposée au carter de soupape (4), **en ce que** l'élément verrouillable peut être fixé par complémentarité de forme à une console (12) dans une position parmi plusieurs positions différentes, et **en ce que** la console (12) est fixée à une partie de châssis de la remorque de véhicule.

2. Dispositif de freinage selon la revendication 1, **caractérisé en ce que** l'élément verrouillable (20) peut être fixé à la console (12) dans cinq à sept positions différentes.

3. Dispositif de freinage selon la revendication 1 ou 2, **caractérisé en ce que** la console (12) est formée au niveau d'un support (10) qui est disposé au moins en partie entre le carter de soupape (4) et la partie de châssis (1).

4. Dispositif de freinage selon la revendication 3, **caractérisé en ce que** le support (10) est composé d'une partie de montage (11), laquelle est disposée entre le carter de soupape (4) et la partie de châssis (1), et d'une partie qui est disposée de manière coudée par rapport à la partie de montage (11) et qui forme la console (12).

5. Dispositif de freinage selon la revendication 4, **caractérisé en ce que** la partie de montage (11) est dotée d'ouvertures (11A) ou d'évidements à travers lesquels mènent des moyens de fixation (14) qui relient le carter de soupape (4) à la partie de châssis (1).

6. Dispositif de freinage selon la revendication 4 ou 5, **caractérisé en ce que** la partie de montage (11) est dotée d'un évidement (11B) ou d'une ouverture à travers lequel/laquelle mènent des parties de carter de la soupape de régulation de freinage (3).

7. Dispositif de freinage selon l'une des revendications 3 à 6, **caractérisé en ce que** le support (10), console (12) incluse, est constitué d'une tôle métallique estampée et déformée.

8. Dispositif de freinage selon l'une des revendications 3 à 7, **caractérisé en ce que** le support (10) est doté de surfaces de fixation orientées dans différentes directions, lesquelles surfaces comprennent respectivement des ouvertures ou des évidements pour le guidage sélectif de moyens de fixation à travers celles-ci/ceux-ci.

9. Dispositif de freinage selon l'une des revendications précédentes, **caractérisé en ce que** la console (12) est dotée, pour la complémentarité de forme de l'élément verrouillable (20), d'une ouverture (30) allongée s'étendant sur un arc de cercle autour de l'axe (A), laquelle ouverture est segmentée et se compose de parties d'ouverture (31) plus étroites et de parties d'ouverture (32) plus larges, qui alternent les unes avec les autres.

10. Dispositif de freinage selon la revendication 9, **caractérisé en ce que** la console (12) se compose d'un corps de base (41) et d'un élément de coulisse (40) fixé à celui-ci, élément de coulisse sur lequel est formée l'ouverture (30), y compris les parties d'ouverture (31, 32) plus étroites et plus larges, et **en ce que** l'élément de coulisse (40) est déplaçable par rapport au corps de base (41) dans la direction longitudinale de l'ouverture (30), de préférence au moyen d'un guide à trou oblong.

11. Dispositif de freinage selon la revendication 9 ou 10, **caractérisé en ce que** l'élément verrouillable (20) est disposé de manière mobile longitudinalement sur un axe de verrouillage (A1) qui s'étend parallèlement à l'axe (A), et **en ce que** l'élément verrouillable (20) est doté, dans la direction longitudinale de l'axe de verrouillage (A1), successivement d'une partie de verrouillage (21) et d'une partie de libération (22), la largeur de la partie de verrouillage (21) étant supérieure à la largeur de la partie d'ouverture (31) plus étroite et n'étant pas supérieure à la largeur de la partie d'ouverture (32) plus large.

12. Dispositif de freinage selon la revendication 11, **caractérisé en ce que** la largeur de la partie de libération (22) n'est pas supérieure à la largeur de la partie d'ouverture (31) plus étroite.

13. Dispositif de freinage selon la revendication 11 ou 12, **caractérisé par** un ressort (23) travaillant dans la direction de l'axe de verrouillage (A1), lequel ressort sollicite l'élément verrouillable (20) en direction de son verrouillage.

14. Dispositif de verrouillage selon l'une des revendications 11 à 13, **caractérisé en ce que** l'élément verrouillable (20) est doté en outre d'une partie de préhension (26), la partie de verrouillage (21) étant disposée entre la partie de préhension (26) et la partie de libération (22).

15. Dispositif de freinage selon l'une des revendications 9 à 14, **caractérisé en ce que** l'extrémité (8A) de la tige d'actionnement (8) est en regard d'un bord de la console (12) tourné vers le carter de soupape (4) et doté de graduations (45).

16. Dispositif de freinage selon la revendication 15, **caractérisé en ce que** l'extrémité de la tige d'actionnement (8) en regard de la graduation (45) est réalisée en tant qu'aiguille de forme pointue.

17. Dispositif de freinage selon la revendication 15 ou 16, **caractérisé en ce que** l'extrémité (8A) de la tige d'actionnement (8) est fixée dans un évidement d'un support (19), et **en ce qu'**un guide latéral s'étendant parallèlement à l'axe (A) pour l'élément verrouillable (20) est réalisé sur le support (19).

18. Dispositif de freinage selon l'une des revendications 1 à 8, **caractérisé en ce que** la console (12) est dotée, pour la complémentarité de forme de l'élément verrouillable (20), d'une pluralité de trous dans lesquels l'élément verrouillable (20) peut être enfiché respectivement pour la sélection de la position, les trous étant disposés sur un arc de cercle s'étendant autour de l'axe (A).

19. Dispositif de freinage selon la revendication 18, **caractérisé en ce que** l'élément verrouillable (20) est une extrémité libre, courbée à angle droit, de la tige d'actionnement (8).
